# EUROPÄISCHE PATENTSCHRIFT

(11) **EP 0 394 528 B1**
(45) Veröffentlichungstag und Bekanntmachung des Hinweises auf die Patenterteilung: **20.01.1993**
(21) Anmeldenummer: 89107630.9
(22) Anmeldetag: 27.04.1989
(51) Int. Cl.: H02K 21/14

(54) **Synchronmaschine**
Synchronous machine
Machine synchrone

(43) Veröffentlichungstag der Anmeldung: 31.10.1990
(73) Patentinhaber: SIEMENS AKTIENGESELLSCHAFT, 80333 München (DE)
(72) Erfinder: Freise, Werner, Prof. Dr.-Ing., D-6750 Kaiserslautern (DE)

(56) Entgegenhaltungen:
- DE-A- 1 488 353
- DE-A- 2 948 980
- FR-A- 2 582 164

## Beschreibung

Die Erfindung bezieht sich auf eine Synchronmaschine gemäß Oberbegriff des Anspruchs 1; eine derartige Synchronmaschine in Klauenpolbauart ist durch die FR-A-2 582 164 bekannt.

Klauenpol-Synchronmaschinen für Bordgeneratoren in Kraftfahrzeugen bekannter Bauart weisen einen Klauenpolrotor mit zwei Klauenpolsystemen mit über den Umfang verzahnt axial ineinandergreifenden Klauenpolen und jeweils stirnseitig die Klauenpole des einen bzw. des anderen Systems untereinander verbindendem Klauenpolträger und zumindest einer ringförmigen Erregerspule auf, deren Erregerachse mit der Drehachse des Rotors zusammenfällt. Die Klauenpolträger sind innerhalb der Erregerspule über ein Rückschlußjoch magnetisch miteinander gekoppelt. Im Stator ist eine Arbeitswicklung in an sich bekannter Weise in über den Umfang verteilten Nuten eines Statorblechpaketes untergebracht.

Durch die vorgenannte FR-A-2 582 164 ist ein Wechselstromgenerator in Klauenpolbauart mit einer feststehenden Erregerwicklung und einem diese umschlingenden, axial magnetisierten feststehenden Ringmagneten unterhalb der luftspaltseitigen Klauenpole bekannt, wobei zur Steuerung des Magnetfeldes die Pole der mit veränderlichem Erregerstrom speisbaren Erregerwicklung entgegengesetzt zu denen des Ringmagneten magnetisiert sind.

Durch die DE-A-1 488 353 ist eine durch tangential magnetisierte Dauermagnete zwischen den Klauenpolen erregte elektrische Maschine der Klauenpolbauart bekannt, bei der zur Steuerung des magnetischen Nutzflusses der Dauermagnete ein magnetischer Nebenschlußpfad und eine ruhende gleichstromgespeiste Steuerwicklung vorgesehen sind, deren Durchflutung zur Nutzflußsteuerung veränderbar ist.

Gemäß Aufgabe vorliegender Erfindung soll mit fertigungstechnisch einfachen Mitteln und bei kleiner Baugröße der Aufwand für die zu erbringende Erregerleistung gemindert werden.

Die Lösung dieser Aufgabe gelingt bei einer Synchronmaschine der eingangs genannten Art durch die Lehre des Anspruchs 1; vorteilhafte Ausgestaltungen der Erfindung sind jeweils Gegenstand der Unteransprüche.

In dem Maße, in dem die erfindungsgemäß vorgesehenen, zweckmäßigerweise mit tangential magnetisierenden Dauermagnete den Streufluß mindern und zum Luftspaltnutzfluß beitragen, kann der durch die Erregerspule aufzubringende elektrisch erregte Fluß reduziert und das dadurch entlastete Rotorjoch in seiner Baugröße verringert werden, wobei die Einstellbarkeit des Erregerfeldes durch die zusätzlichen Dauermagnete praktisch nicht eingeschränkt ist, da bei Abschaltung des die Erregerspule speisenden Erregerstromes der magnetische Kreis des Klauenpolrotors als magnetischer Kurzschluß für die Dauermagnete wirkt.

Eine schleifringlose, dadurch verschleißärmere und betriebssichere sowie durch die Dauermagnete besonders vorteilhafte einsetzbare erfindungsgemäße Ausführung ist dadurch gekennzeichnet, daß die Erregerspule radial unterhalb der Klauenpole in einem Luftspaltabstand fest über ein magnetisch gut leitendes Tragteil mit der einen Motorstirnseite und die Klauenpole radial innen auf einer gemeinsamen unmagnetischen Hülse abgestützt und über die Klauenpolverbindung vor der anderen Motorstirnseite mit der Rotorwelle verbunden sind.

Die Erfindung sowie weitere vorteilhafte Ausgestaltungen der Erfindung werden im folgenden anhand eines schematisch dargestellten Ausführungsbeispiels in der Zeichnung näher erläutert; darin zeigen:

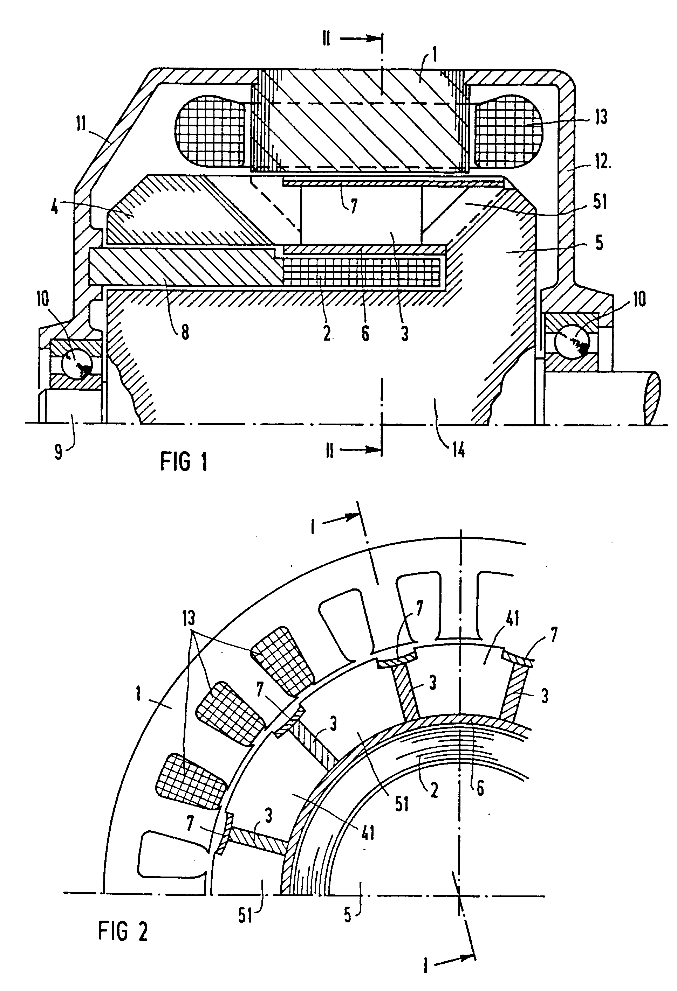

- FIG 1: einen axialen Schnitt durch eine Synchronmaschine mit Klauenpolrotor und feststehender Erregerspule gemäß Schnittverlauf I-I in FIG 2,
- FIG 2: einen Schnitt durch die Synchronmaschine in FIG 1 gemäß Schnittverlauf II-II in FIG 1.

In einem Statorblechpaket 1 ist in über den Umfang verteilten Nuten eine Arbeitswicklung 13 untergebracht. An dem Statorblechpaket 1 sind an der linken Stirnseite ein erstes Lagerschild 11 und an der rechten Stirnseite ein zweites Lagerschild 12 befestigt. In den Lagerschilden 12 ist über Lager 10 eine Rotorwelle 9 eines Klauenpolrotors mit den Klauenpolen 41 eines ersten Klauenpolsystems und den Klauenpolen 51 eines zweiten Klauenpolsystems drehbar gelagert. Die Klauenpole 41 bzw.51 jedes Klauenpolsystems sind untereinander durch stirnseitige Klauenpolverbindungen 4 bzw.5 verbunden.

Zur elektrischen Erregung ist eine feststehende ringförmige Erregerspule 2 vorgesehen, die über ein sich axial erstrekkendes, zylindrisches magnetisch gut leitfähiges Halteteil 8 am ersten Lagerschild 11 befestigt ist. Die festen Zuleitungen zur Erregerspule 2 verlaufen in hier nicht näher dargestellter Weise durch axiale Bohrungen des Halteteil 8. Die über den Umfang wechselweise aufeinanderfolgenden, axial ineinandergesteckten Klauenpole 41 des ersten Klauenpolsystems bzw. Klauenpole 51 des zweiten Klauenpolsystems sind radial innen auf einer unmagnetischen Hülse 6 fest verbunden, derart daß das erste Klauenpolsystem mit den durch eine stirnseitige, das Halteteil 8 radial übergreifende Klauenpolverbindung 4 der Klauenpole 41 auf der Hülse 6 fliegend gelagert ist. Die Klauenpole 51 des zweiten Klauenpolsystems sind über ihre Klauenpolverbindung 51 als Träger mit der Rotorwelle 9 verbunden. Zur zusätzlichen Abstützung der Klauenpole 41 bzw.51 auf der Hülse 6 sind in der Nähe des Luftspaltes, zwischen diesen unmagnetische Klemmbleche 7 tangential zwischengeklemmt, die auch als zusätzliche Verdrehsicherung und als tangentiale Justiermittel der Klauenpole 41,51 und als Nutenverschlüsse dienen.

Zwischen den tangentialen Stirnflächen der Klauenpole 41,51 und radial unter den Klemmblechen 7 und der radial innen abdeckenden Hülse 6 sind vorzugsweise tangential magnetisierte Dauermagnete 3 eingesetzt. Die Dauermagnete 3 sind derart angeordnet bzw. magnetisiert, daß ihre magnetische Spannung derjenigen vom Strom in der Erregerwicklung entgegenwirkt. Dadurch wird der Streufluß zwischen den Klauenpolen 41 bzw.51 vermieden und eine Verstärkung des über den Luftspalt in das Statorblechpaket 1 übertretende magnetischen Flusses erzielt. Bei Abschaltung der Erregerspule 2 wirkt das Rotorjoch 14 des Klauenpolsystems mit dem übrigen magnetischen Kreis im Rotor als magnetischer Kurzschluß für die Dauermagnete 3, derart daß sich der Fluß der Dauermagnete 3 dann nicht über den statorseitigen Luftspalt, sondern in entgegengesetzter Richtung zum elektrisch erzeugten Erregerfeld durch das Rotorjoch schließt.

## Patentansprüche

1. Synchronmaschine mit einem Erregersystem aus einer Vielzahl elektrisch erregter Einzelpole in Stator oder Rotor, insbesondere in Form von durch zumindest eine gemeinsame Erregerspule (2) und/oder eine Dauermagnetanordnung erregter Klauenpole (41 bzw.51), **dadurch gekennzeichnet,** daß zwischen den Polen bzw. den Klauenpolen (41 bzw. 51) in der Nähe des Luftspaltes tangential magnetisierte Dauermagnete (3) mit einer Magnetisierung angeordnet sind, die dem Streufluß zwischen den Polen bzw. den Klauenpolen (41 bzw. 51) entgegenwirkt und deren Fluß den magnetischen Fluß der Erregerspule (2) unterstützt.

2. Synchronmaschine nach Anspruch 1 mit einem vielpoligen, durch eine ringförmige Erregerspule (2) erregten Klauenpolrotor mit über den Umfang wechselweise axial ineinandergreifenden Klauenpolen (41 bzw.51) eines ersten Klauenpolsystems (Klauenpole 41) bzw. eines zweiten Klauenpolsystems (Klauenpole 51) mit einer Klauenpolverbindung (5) der Klauenpole (51) untereinander und zur Rotorwelle (9) der Synchronmaschine vor der anderen Motorstirnseite (Lagerschild 12), wobei die Erregerspule (2) radial unterhalb der Klauenpole (41,51) in einem Luftspaltabstand fest über ein magnetisch gut leitendes Halteteil (8) mit der einen Motorstirnseite (Lagerschild 11) verbunden ist und die Klauenpole (41,51) radial innen auf einer gemeinsamen unmagnetischen Hülse (6) abgestützt sind.

3. Synchronmaschine nach Anspruch 2, **dadurch gekennzeichnet,** daß zwischen den Klauenpolen (41,51) luftspaltseitig tangentiale unmagnetische Klemmstücke (7) angeordnet sind.

4. Synchronmaschine nach zumindest einem der Ansprüche 1 bis 3, **gekennzeichnet** durch den Einsatz als Motor und/oder Generator.

5. Synchronmaschine nach zumindest einem der Ansprüche 1 bis 4, **gekennzeichnet** durch den Anschluß an einen mechanischen oder elektronischen Kommutator eines Gleichstrommotors und/oder Gleichstromgenerators, insbesondere in einem Kraftfahrzeug.

## Claims

1. Synchronous machine having an excitation system comprising a plurality of electrically excited individual poles in the stator or the rotor, in particular in the form of claw poles (41 or 51) excited by at least one common exciter coil (2) and/or a permanent magnet arrangement, characterised in that between the poles or the claw poles (41 or 51) near the air gap tangentially magnetised permanent magnets (3) are arranged with a magnetisation which counteracts the leakage flux between the poles or the claw poles (41 or 51) and whose flux supports the magnetic flux of the exciter coil (2).

2. Synchronous machine according to claim 1, having a multi-pole claw pole rotor excited by an annular exciter coil (2) having claw poles (41 or 51) of a first claw pole system (claw pole 41) or of a second claw pole system (claw pole 51) alternately axially interengaging over the circumference, with a claw pole connection (5) of the claw poles (51) with one another and to the rotor shaft (9) of the synchronous machine in front of the other motor end face (end bracket 12), wherein the exciter coil (2) is firmly connected radially below the claw poles (41, 51) in an air gap spacing by means of a magnetically good conductive holding portion (8) to a motor end face (end bracket 11) and the claw poles (41, 51) are supported radially inwardly on a common non-magnetic sleeve (6).

3. Synchronous machine according to claim 2, characterised in that between the claw poles (41, 51) tangential non-magnetic clamping pieces (7) are arranged on the air gap side.

4. Synchronous machine according to at least one of claims 1 to 3, characterised by its use as a motor and/or generator.

5. Synchronous machine according to at least one of claims 1 to 4, characterised by the connection to a mechanical or electronic commutator of a direct current motor and/or direct current generator, in particular in a motor vehicle.

## Revendications

1. Machine synchrone comportant un système excitateur constitué par une multiplicité de pôles individuels excités électriquement dans le stator ou le rotor, notamment sous la forme de pôles à griffes (41 ou 51) excités par au moins une bobine excitatrice commune (2) et/ou un dispositif d'aimants permanents, caractérisée par le fait qu'entre les pôles ou les pôles à griffes (41 ou 51) sont disposés, à proximité de l'entrefer, des aimants permanents (3) aimantés tangentiellement et possédant une aimantation qui s'oppose au flux de fuite entre les pôles ou les pôles à griffes (41 ou 51) et dont le flux renforce le flux magnétique de la bobine excitatrice (2).

2. Machine synchrone suivant la revendication 1 comportant un rotor possédant une multiplicité de pôles à griffes et excité par une bobine excitatrice annulaire (2) et comportant des pôles à griffes (41 ou 51) qui s'interpénètrent en alternance axialement sur la périphérie et font partie d'un premier système de pôles à griffes (pôles à griffes 41) et d'un second système de pôles à griffes (pôles à griffes 51), avec une liaison (5) des pôles à griffes (51) entre eux et avec l'arbre (9) du rotor de la machine synchrone devant l'autre face frontale du moteur (flasque de palier 12), et dans lequel la bobine excitatrice (2) est raccordée radialement de façon fixe, au-dessous des pôles à griffes (41,51) dans un espace d'entrefer, à une face frontale du moteur (flasque de palier 11) par l'intermédiaire d'une partie de retenue (8) bien conductrice magnétiquement, et les pôles à griffes (41, 51) sont soutenus sur le côté radialement intérieur par une douille amagnétique commune (6).

3. Machine synchrone suivant la revendication 2, caractérisée par le fait que des éléments de serrage amagnétiques tangentiels (7) sont disposés du côté de l'entrefer entre les pôles à griffes (41, 51).

4. Machine synchrone suivant au moins l'une des revendications 1 à 3, caractérisée par son utilisation en tant que moteur et/ou générateur.

5. Machine synchrone suivant au moins l'une des revendications 1 à 4, caractérisée par son raccordement à un collecteur mécanique ou électronique d'un moteur à courant continu et/ou d'un générateur de courant continu, notamment dans un véhicule automobile.
